# EUROPEAN PATENT SPECIFICATION

(11) **EP 3 396 337 B1**
(45) Date of publication and mention of the grant of the patent: **27.12.2023**
(21) Application number: 17167850.1
(22) Date of filing: 24.04.2017
(51) Int. Cl.: G01H 1/10, G01H 1/00

(54) **TORSIONAL VIBRATION MONITORING AND DIAGNOSTICS SYSTEM AND METHOD**
SYSTEM UND VERFAHREN ZUR TORSIONSSCHWINGUNGSÜBERWACHUNG UND DIAGNOSE
SYSTÈME ET PROCÉDÉ DE SURVEILLANCE ET DE DIAGNOSTIC DES VIBRATIONS DE TORSION

(43) Date of publication of application: 31.10.2018
(73) Proprietor: General Electric Technology GmbH, 5400 Baden (CH)
(72) Inventor: GOLEBIOWSKI, Mateusz, 5401 Baden (CH); MUELLER, Dirk, 5401 Baden (CH); ABRATE, Bastien, 5401 Baden (CH); BORRECA, Stefano, 5401 Baden (CH); SCHILLING, Christoph, 5401 Baden (CH); KNOPF, Eric, 5401 Baden (CH); KRUEGER, Thomas D., 5401 Baden (CH)
(74) Representative: Novagraaf Group

(56) References cited:
- US-A- 5 501 105
- US-A- 5 698 788
- US-A- 5 922 963
- US-A1- 2011 259 093
- US-A1- 2012 229 290
- US-A1- 2016 033 321
- US-B1- 6 408 696

## Description

### FIELD OF THE DISCLOSURE

This disclosure relates to monitoring and diagnostics systems, and more particularly, to torsional vibration monitoring and diagnostics systems and methods.

### BACKGROUND OF THE DISCLOSURE

Moving parts are often accompanied by vibrations, some of which are normal and some of which can be harmful. An electric motor for example has a rotor that generates vibrations in the casing of the motor. The amplitude and nature of the vibrations can be attributed to various factors such as a rotational speed of the rotor and/or a load applied to the electric motor. In some instances, the rotor may develop an abnormal condition due to excessive wear and tear or due to other factors, the abnormal condition causing the rotor to wobble. If left unaddressed, the wobbling rotor can cause damage to other parts of the electric motor.

US 2016/033321 A1 discloses a method for monitoring sub-synchronous torsional oscillations of a shaft line of a steam turbine includes measuring a rotational speed of said shaft line over a period of time and generating, from the measured rotational speed, a signal representative of said rotational speed over said period of time.

US 2011/259093 A1 discloses a method for detecting resonance in a rotor shaft of a turbine engine, the resonance frequency of the said rotor shaft belonging to a resonance band centered on an estimated resonance frequency.

US 2012/229290 A1 discloses a method of monitoring twisting vibration of a rotary shaft of a turbine engine includes obtaining a vibratory acceleration signal from a sensor located on a stationary component of the turbine engine.

US 5 501 105 A discloses a method and system for accurately analyzing shaft encoder signals from rotating machines.

US 5 922 963 A refers to a method for determining a narrowband envelope alarm limit based on machine vibration spectra. The method comprises determining a mean vibration spectrum based on a plurality of vibration spectra. This mean vibration spectrum is sub-divided into a plurality of frequency windows. For each frequency window the largest vibration amplitude is used as a threshold. The thresholds of all windows are used as alarm limit envelope.

### BRIEF DESCRIPTION OF THE DISCLOSURE

Embodiments of the disclosure are directed generally to torsional vibration monitoring and diagnostics systems and methods, which can generate an alarm when torsional vibrations exceed one or more predefined thresholds.

The invention refers to a method of using a torsional vibration monitoring and diagnostics system coupled to a moving component according to claim 1.

The invention also refers to a non-transitory computer-readable storage medium according to claim 4. Further advantageous aspects of the present invention are defined in the dependent claims.

Other embodiments and aspects of the disclosure will become apparent from the following description taken in conjunction with the following drawings.

### BRIEF DESCRIPTION OF THE DRAWINGS

Having thus described the disclosure in general terms, reference will now be made to the accompanying drawings, which are not necessarily drawn to scale, and wherein:
FIG. 1 illustrates an exemplary torsional vibration monitoring and diagnostics system coupled to a moving component in accordance with an exemplary implementation of the disclosure.
FIG. 2 illustrates some example components that can be included in the torsional vibration monitoring and diagnostics system shown in FIG. 1.
FIG. 3 illustrates a set of frequency-domain snapshots in a 3D format to indicate time and frequency relationships between the set of frequency-domain snapshots and a time-variant signal coupled into the torsional vibration monitoring and diagnostics system shown in FIG. 1.
FIG. 4 illustrates an exemplary frequency-domain alarm threshold arrangement for detecting one or more abnormal spectral components in a frequency-domain snapshot in accordance with an exemplary implementation of the disclosure.
FIG. 5 illustrates an exemplary configuration of the torsional vibration monitoring and diagnostics system shown in FIG. 1 when used to implement the frequency-domain alarm threshold arrangement shown in FIG. 4.
FIG. 6 illustrates some exemplary elements of a real-time protection system that can be used to execute a real-time protection procedure in the time-domain in accordance with an exemplary implementation of the disclosure.
FIG. 7 illustrates a computer that can be used to execute some computational components of the torsional vibration monitoring and diagnostics system in accordance with an exemplary implementation of the disclosure.

The disclosure will be described more fully hereinafter with reference to the drawings, in which exemplary embodiments of the disclosure are shown. This disclosure may, however, be embodied in many different forms and should not be construed as limited to the exemplary embodiments set forth herein; rather, these embodiments are provided so that this disclosure will satisfy applicable legal requirements. Like numbers refer to like elements throughout. It should be understood that certain words and terms are used herein solely for convenience and such words and terms should be interpreted as referring to various objects and actions that are generally understood in various forms and equivalencies by persons of ordinary skill in the art. Furthermore, the word "example" as used herein is intended to be non-exclusionary and non-limiting in nature. More particularly, the word "exemplary" as used herein indicates one among several examples, and it should be understood that no undue emphasis or preference is being directed to the particular example being described.

### DETAILED DESCRIPTION

In terms of a general overview, certain embodiments described in this disclosure pertain to a torsional vibration monitoring and diagnostics system that can be coupled to a moving component and used for executing various operations such as monitoring the vibration characteristics of the moving component, archiving vibration data of the moving component, diagnosing the vibration data of the moving component to detect an abnormal vibration condition, and providing an alarm upon detecting an abnormal vibration condition. The various operations can be carried out in one or both of a time domain and a frequency domain. The frequency domain operations can be carried out by obtaining a set of frequency-domain snapshots of a time-variant signal that is obtained via one or more sensors coupled to the moving component. The time-variant signal can represent various motion characteristics of the moving component.

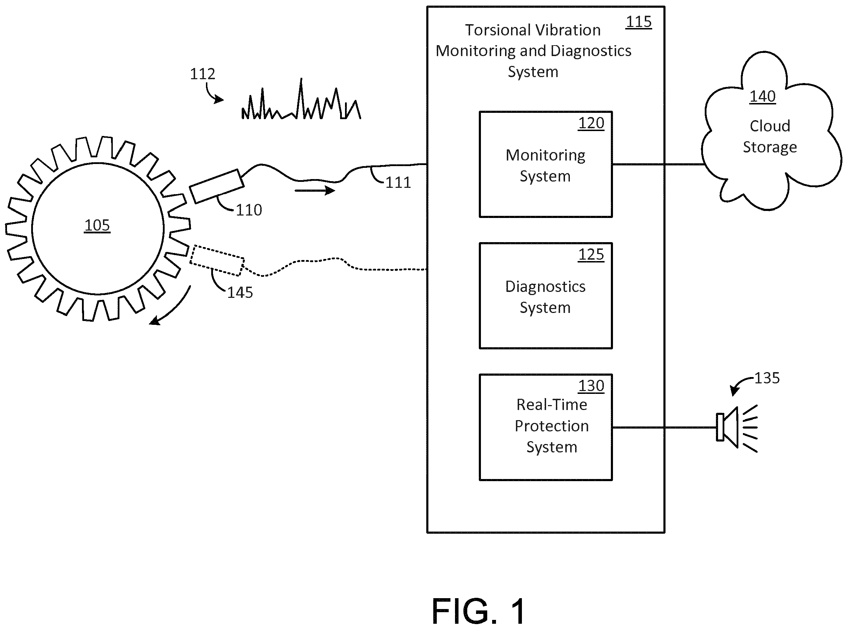

Attention is now drawn to FIG. 1, which illustrates an exemplary torsional vibration monitoring and diagnostics system **115** coupled to a moving component **105** in accordance with an exemplary implementation of the disclosure. More particularly, the exemplary torsional vibration monitoring and diagnostics system **115** is coupled to the moving component **105** by using a sensor **110** that senses a movement characteristic of the moving component **105.** In this exemplary implementation, the moving component **105** is a rotary component and the sensor **110** is a speed sensor that senses a rotary velocity behavior of the rotary component. In other implementations, the moving component **105** can be any other moving component such as a reciprocating element or an element that moves linearly, and the sensor **110** can be selected to provide one of various types of motion information pertaining to the moving component.

As shown in FIG. 1, the sensor **110** is coupled to the torsional vibration monitoring and diagnostics system **115** via a communication link **111.** The communication link **111** can be implemented in various ways such as in the form of a wired link, an optical link, or a wireless link, and by using various communication formats. The rotary velocity behavior of the moving component **105** can be transmitted through the communication link **111** as a time-variant signal **112** representing a motion characteristic of the moving component **105.** The time-variant signal **112** can be an analog signal that varies in amplitude from instant-to-instant depending on instant-to-instant velocity variations in the moving component **105.** In some example implementations, more than one sensor can be used. This aspect is indicated in FIG. 1 by the dashed line representation of a sensor **145,** though more than one sensor can be used.

The torsional vibration monitoring and diagnostics system **115** can include various operational elements such as a monitoring system **120,** a diagnostics system **125,** and a real-time protection system **130.** The monitoring system **120** can be used to collect, process, and/or archive data pertaining to the rotary velocity behavior of the moving component **105** (obtained via the sensor **110).** One exemplary procedure for executing such functionality will be described below in more detail. The data obtained via the monitoring system **120** can be stored in various storage media such as in one or storage elements (not shown) of the torsional vibration monitoring and diagnostics system **115** and/or in various storage elements that constitute cloud storage 140.

The diagnostics system **125** can be used to process the data pertaining to the rotary velocity behavior of the moving component **105** and identify certain abnormal behavioral characteristics of the moving component **105.** For example, the diagnostics system **125** can be used to process the data over a period of time and detect an oscillatory condition that is indicative of torsional vibration in the moving component **105.**

The real-time protection system **130** can be used to process real-time information provided by the sensor **110** and detect an abnormal condition or a potentially damaging condition in the moving component **105.** For example, the real-time protection system **130** can be used to detect an abnormal condition when an amplitude of a filtered version of the time-variant signal **112** exceeds a predefined threshold. Upon detecting the abnormal condition, the real-time protection system **130** can transmit a signal to an alarm unit **135** for alerting an operator and/or a signal to a motion controller (not shown) for modifying a motion of the moving component 105 in order to address the abnormal condition.

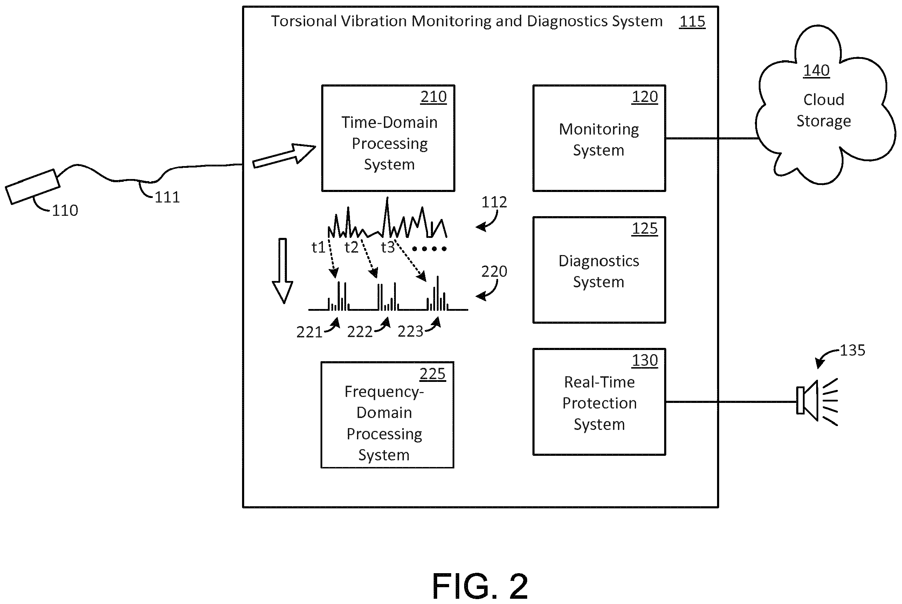

FIG. 2 illustrates some additional elements that can be included in the torsional vibration monitoring and diagnostics system **115.** These additional elements can include a time-domain processing system **210** and a frequency-domain processing system **225.** The time-domain processing system **210** can include interface circuitry (not shown) that receives the time-variant signal **112** provided by the sensor **110.** In some exemplary implementations, a number of time-variant signals from a number of sensors can be coupled into the interface circuitry (in addition to the time-variant signal **112** provided by the sensor **110).** The time-domain processing system **210** can further include signal sampling circuitry that samples the time-domain processing system **210** at various sampling instants (shown as t1, t2, t3 ...) and provides signal samples to the frequency-domain processing system **225,** and in one or more example implementations, to one or more of the monitoring system **120,** the diagnostics system **125,** and the real-time protection system **130.** In the example implementation shown in FIG. 2, the sampling instants are periodic and repetitive in nature. However, in some other example implementations, the sampling instants can be aperiodic or random in nature.

The frequency-domain processing system **225** receives the signal samples provided by the time-domain processing system **210** and transforms each signal sample into a frequency domain representation. Each frequency domain representation constitutes an instantaneous frequency-domain snapshot indicative of a spectral characteristic of the time-variant signal **112** at a corresponding sampling instant. Thus, a set of frequency-domain snapshots **220** can include a first frequency-domain snapshot **221** that is indicative of a spectral characteristic of the time-variant signal **112** at a sampling instant t1, a second frequency-domain snapshot **222** that is indicative of a spectral characteristic of the time-variant signal **112** at a sampling instant t2, a third frequency-domain snapshot **223** that is indicative of a spectral characteristic of the time-variant signal **112** at a sampling instant t3, and so on. In some example implementations, the set of frequency-domain snapshots **220** can be provided to each of the monitoring system **120,** the diagnostics system **125,** and the real-time protection system **130,** in real-time in the form of a serial stream of frequency-domain snapshots over an indefinite period of time.

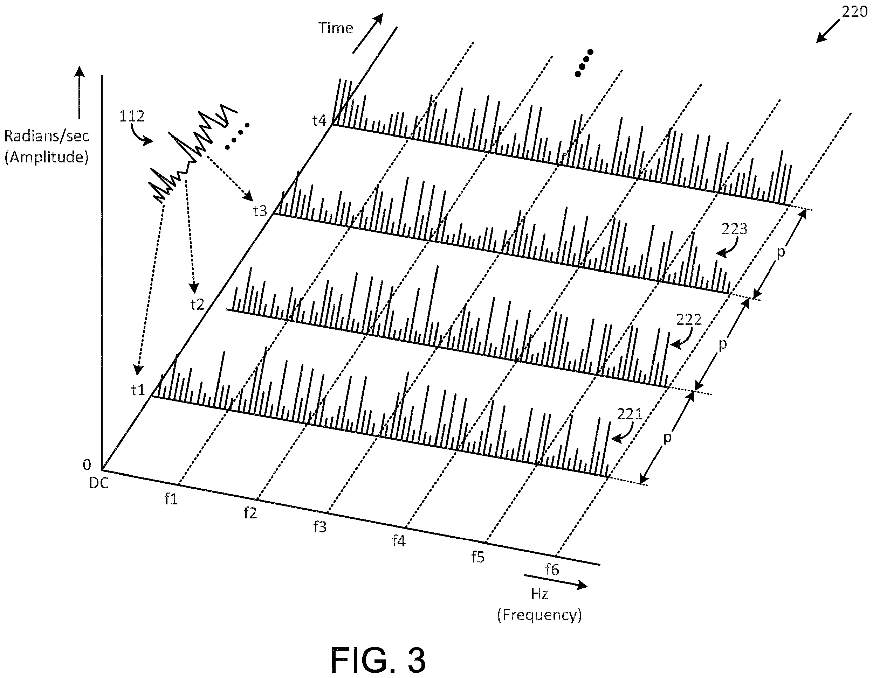

FIG. 3 illustrates the set of frequency-domain snapshots **220** in a 3D format to indicate time and frequency relationships between the time-variant signal **112** and the set of frequency-domain snapshots **220.** The first frequency-domain snapshot **221,** which corresponds to the sampling instant t1 with reference to the time-variant signal **112,** includes a number of frequency components spread out over a spectral bandwidth. Each of the second frequency-domain snapshot **222,** which corresponds to the sampling instant t2 with reference to the time-variant signal **112,** and the third frequency-domain snapshot **222,** which corresponds to the sampling instant t3 with reference to the time-variant signal **112** (and so on) also includes a number of frequency components spread out over the spectral bandwidth. However, an amplitude of any particular frequency component will be different at various instants in time. For example, a frequency component at f1 Hz can have a first amplitude at the instant t1, a second amplitude at the instant t2, a third amplitude at the instant t3, and so on. As another example, a frequency component at f2 Hz can have a certain amplitude at the instant t1, another amplitude at the instant t2, and yet another amplitude at the instant t3, and so on. Thus, it can be understood that the time-variant signal **112** can have various amplitude fluctuations at various sampling instants in time accompanied by various frequency components of various amplitudes during the various sampling instants in time. The various amplitude fluctuations, which can be expressed in radians/second, can be indicative in one example, of instant-to-instant velocity variations in the moving component **105.** In other examples, the instant-to-instant variations can be indicative of various other conditions and characteristics of the moving component **105,** such as oscillatory conditions, abnormal acceleration, and torsional deformation.

In one example implementation, the various sampling instants in time can be periodic with a repetition rate indicated by a period "p". In other example implementations, the various sampling instants in time can be aperiodic or random. When periodic, the repetition rate (period "p") can be set by a human entity such as a technician operating the exemplary torsional vibration monitoring and diagnostics system **115.** In one example application, the period "p" can range from about 1 minute to about an hour. The spectral bandwidth (frequency range from DC to beyond f5 Hz), as well as the frequency resolution associated with the set of frequency-domain snapshots **220** can also be set by a human entity such as the technician interacting with the exemplary torsional vibration monitoring and diagnostics system **115.** In one example application, the frequency resolution can be set to less than about 0.125 Hz. In some example applications, the spectral bandwidth and/or the frequency resolution can be selected on the basis of trying to detect one or more oscillatory conditions indicative of a torsional vibration in the moving component **105.** The one or more oscillatory conditions can include an amplitude of the time-variant signal **112** at a certain frequency (f1, for example) varying in an oscillatory manner (a slow sine wave, for example) over a time period (0 through t4, for example). A windowing function can also be used during conversions between the frequency-domain and the time-domain in some example implementations for operating upon individual time-domain snapshots to generate one or more of the set of frequency-domain snapshots **220.**

In one or more example implementations, some or all of the frequency-domain snapshots **220** can be provided to the monitoring system **120,** the diagnostics system **125,** and/or the real-time protection system **130** (these systems are shown in Fig. 2). It can be appreciated that the amount of information contained in the frequency-domain snapshots **220,** as well as the subtle nature of one or more oscillatory conditions that can be present in the frequency-domain snapshots **220,** prevent processing of the frequency-domain snapshots **220** by a human operator, especially when done in real-time over a significant period of time. The processing carried out by one or more of the monitoring system **120,** the diagnostics system **125,** and/or the real-time protection system **130** can be generally characterized as operations executed in real-time (disregarding the small processing delays that may occur due to certain operations such as time-domain to frequency domain conversion).

Furthermore, it must be understood that in some embodiments, the set of frequency-domain snapshots **220** can be generated by the frequency-domain processing system **225** in real-time where each individual time-domain signal sample provided by the time-domain processing system **210** is converted into a frequency domain snapshot. Thus, the frequency domain snapshot **221** shown in FIG. 3, which represents a single time-domain signal sample, can be referred to herein as an instantaneous frequency domain snapshot. However, in some other embodiments, the frequency-domain processing system **225** can accumulate a set of time-domain signal samples provided by the time-domain processing system **210** (rather than individual time-domain signal samples) and use an averaging procedure upon the set of time-domain signal samples to generate a corresponding frequency domain snapshot that is an averaged version of the set of time-domain signal samples. Thus, the frequency domain snapshot **221,** which represents an averaged version of multiple time-domain signal samples collected over a period of time, can be referred to in these other embodiments as an averaged frequency domain snapshot (t1 will accordingly represent a time at which the averaged version frequency domain snapshot is generated/displayed/used).

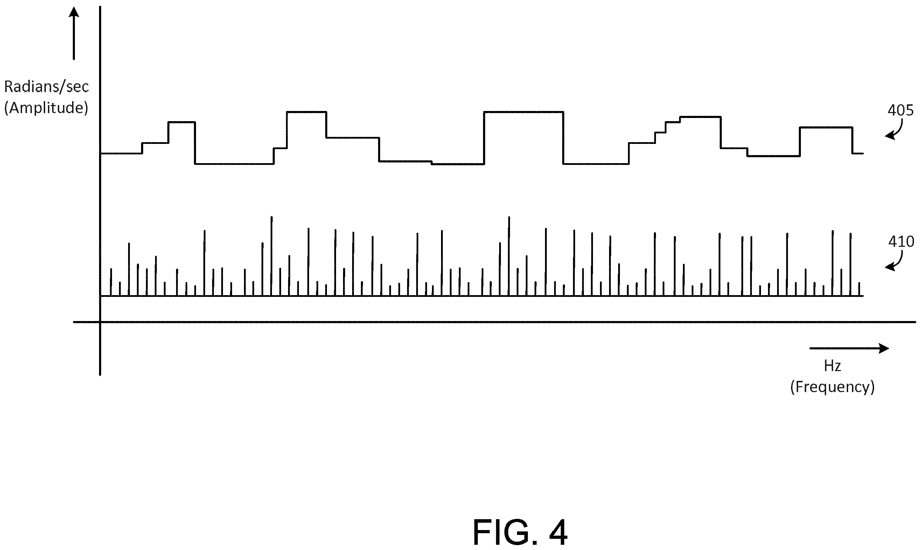

FIG. 4 illustrates an exemplary frequency-domain alarm threshold **405** that can be used to detect one or more abnormal spectral components in an instantaneous frequency domain snapshot **410.** More particularly, the exemplary frequency-domain alarm threshold **405** can be used by the real-time protection system **130** to execute a real-time protection procedure to detect a torsional vibration in the moving component **105** and provide a warning via the alarm unit **135.** The frequency-domain alarm threshold **405,** which can also be referred to as a "skyline," can be defined by a human operator such as a technician interacting with the exemplary torsional vibration monitoring and diagnostics system 115. In the inventive implementation, the frequency-domain alarm threshold **405** is defined as a spectral envelope by using one or more averaged frequency domain snapshots. In an example not forming part of the claimed invention, the frequency-domain alarm threshold **405** can also be calculated based on a mechanical model of the moving component **105** and/or a mechanical model of a machine incorporating the moving component **105.** When representing the mechanical model of the machine, the frequency-domain alarm threshold **405** represents an envelope (skyline) for all components of the machine.

In one exemplary implementation of a real-time protection procedure, a human operator first determines a frequency of calculation that is to be applied to the instantaneous frequency domain snapshot **410.** The frequency of calculation can range from 5-10 seconds in some example embodiments. The human operator can then determine a frequency range, a resolution, and a windowing function to be applied against the instantaneous frequency domain snapshot **410.** The windowing function can be applied to a time-domain signal as a part of a conversion into a frequency-domain signal. An alarm can be generated when one or more of the components of the instantaneous frequency domain snapshot **410** exceeds a corresponding portion of the frequency-domain alarm threshold **405.** False alarms can be avoided by setting a duration of time that must be exceeded during which one or more of the components of the instantaneous frequency domain snapshot **410** exceeds a corresponding portion of the frequency-domain alarm threshold **405,** before an alarm is generated.

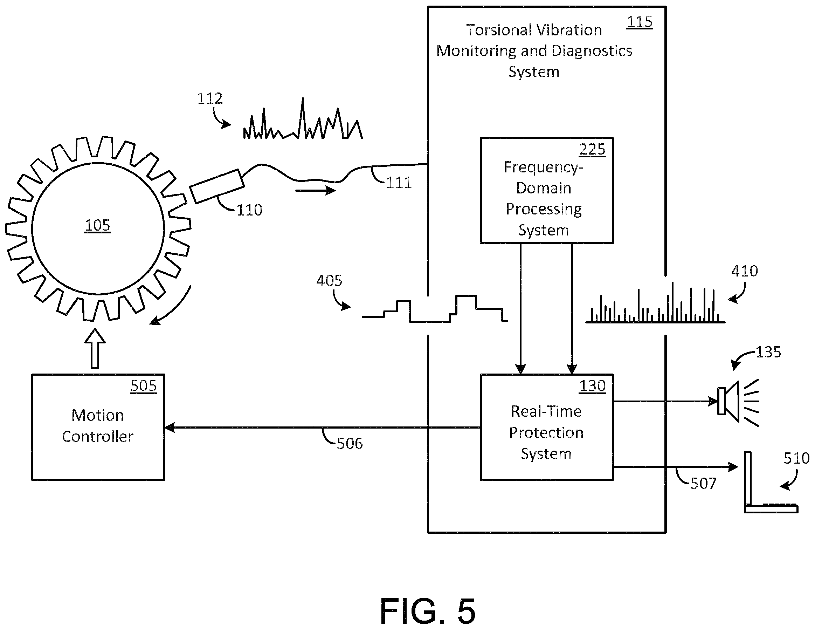

FIG. 5 illustrates an exemplary configuration of the torsional vibration monitoring and diagnostics system **115** when used to implement the frequency-domain alarm threshold arrangement shown in FIG. 4. In this exemplary configuration, the frequency-domain processing system **225** provides the frequency-domain alarm threshold **405** and the instantaneous frequency domain snapshot **410** to the real-time protection system **130.** In other exemplary configurations, the frequency domain processing system **225** can provide to the real-time protection system **130,** several instantaneous frequency domain snapshots and the real-time protection system **130** can generate the frequency-domain alarm threshold **405** by using the instantaneous frequency domain snapshots.

Irrespective of the manner by which it is provided, the real-time protection system **130** uses the frequency-domain alarm threshold **405** and one or more of the several instantaneous frequency domain snapshots to execute a real-time protection procedure to detect a torsional vibration in the moving component **105** and provide a warning. In some example implementations, the real-time protection system **130** is configured to execute a real-time protection procedure. As a part of this procedure, the real-time protection system **130** can transmit a signal to a motion controller (via a communication link **506)** upon detecting a currently-occurring torsional vibration and/or upon generating a prediction of a future-occurrence of a torsional vibration. According to the invention, false alarms can be avoided by using detection logic, in the form of one or more timers, to detect excursions by one or more frequency components over the frequency-domain alarm threshold **405,** when these excursions persist beyond a threshold time period. Excursions which occur within the threshold time period and do not result in transmission of a signal to the motion controller can be used in some implementations for various other purposes such as archiving and data collection. The communication link **506** can be implemented in various ways, such as in the form of a wired link, an optical link, or a wireless link, and the signal can be, for example, one of a message, a control signal, or a warning signal.

Upon receiving such a signal, the motion controller **505** can modify a behavior of the moving component **105** to prevent damage to the moving component **105** and/or to other elements associated with the moving component **105.** It can be understood that in such exemplary configurations the torsional vibration monitoring and diagnostics system **115** can provide real-time protection of the moving component **105** by continuously monitoring frequency-domain parameters of the time-variant signal **112.**

In some other example implementations, the real-time protection system **130** can transmit a signal to a user interface **510** (via a communication link **507)** upon detecting a currently-occurring torsional vibration and/or upon generating a prediction of a future-occurrence of a torsional vibration. A human operator can use the user interface **510** for various purposes such as for querying the real-time protection system **130** and/or for issuing commands to the real-time protection system **130.** One or more of these commands can be routed via the real-time protection system **130** to the motion controller **505,** which can be located on a factory floor for example while the user interface **510** is located in a command center far from the factory.

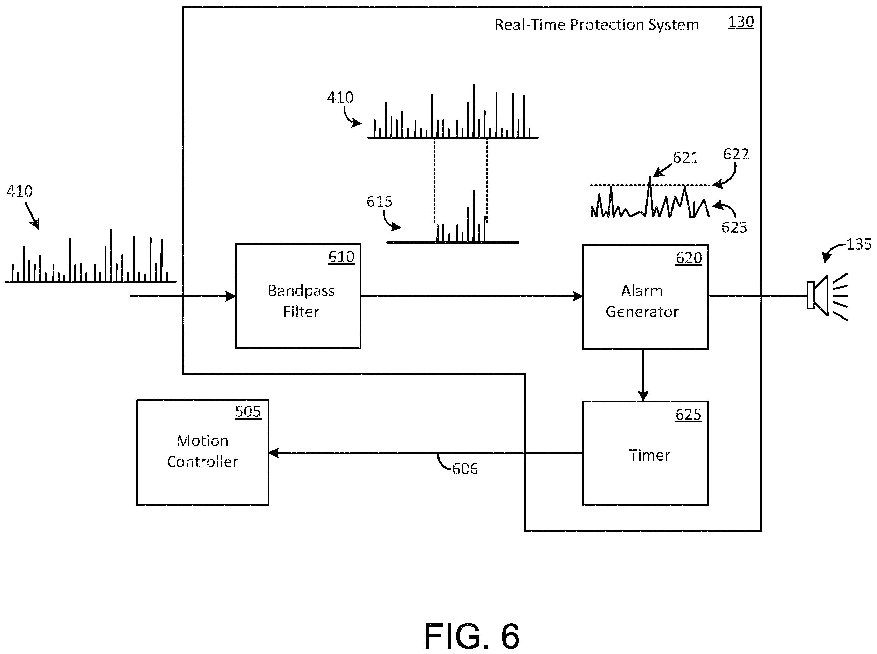

FIG. 6 illustrates some exemplary elements of the real-time protection system **130** that can be used to execute a real-time protection procedure in the time-domain in accordance with an exemplary implementation of the disclosure. The exemplary elements can include a bandpass filter **610,** an alarm generator **620,** and a timer **625.** The bandpass filter **610** can receive from the time-domain processing system **210** and/or the frequency-domain processing system **225,** a signal that is represented by the time-variant signal **112** and/or the instantaneous frequency domain snapshot **410.** The output of the bandpass filter **610** is a bandwidth-limited signal **615** that contains a limited number of frequency components. The bandwidth-limited signal **615,** which is shown in real-time in the time-domain, as a filtered time-variant signal **623,** is provided to the alarm generator **620.** The alarm generator **620** can use one or more time-domain alarm thresholds, such as the time-domain alarm threshold **622,** to detect any abnormal amplitude excursions in the filtered time-variant signal **623.** One exemplary amplitude excursion **621** that exceeds the time-domain alarm threshold **622** is detected by the alarm generator **620** and processed by the timer **625** in order to determine a time duration over which the amplitude excursion **621** exceeds the time-domain alarm threshold **622.** The time duration can be defined by a human operator based on avoiding false alarms being generated in response to momentary spikes in the filtered time-variant signal **623** (such as transients caused by power supply fluctuations).

An output signal from the timer **625** (or from the alarm generator **620)** can be transmitted via a communication link **606** to the motion controller **505.** The communication link **606,** can be implemented in various ways, such as in the form of a wired link, an optical link, or a wireless link, and the signal can be for example, one of a message, a control signal, or a warning signal. Upon receiving such a signal, the motion controller **505** can modify a behavior of the moving component **105** to prevent damage to the moving component **105** and/or to other elements associated with the moving component **105.** It can therefore be understood that in such exemplary configurations the torsional vibration monitoring and diagnostics system **115** operates to provide real-time protection by monitoring time-domain parameters of a bandlimited version of the time-variant signal **112.**

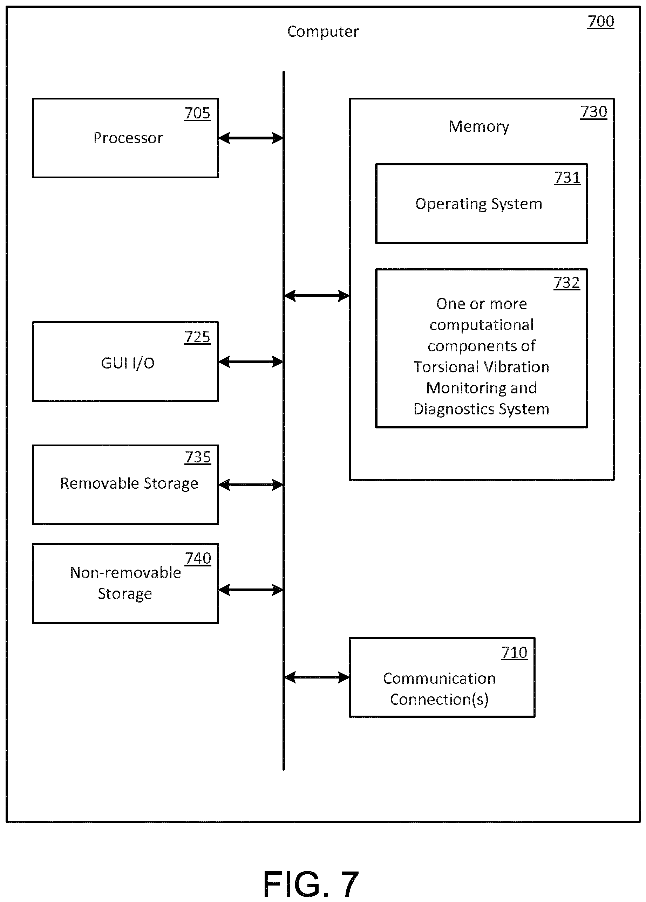

FIG. 7 illustrates a computer **700** that can be used to implement some computational components of the torsional vibration monitoring and diagnostics system **115** in accordance with one or more exemplary embodiments. Various other components of the torsional vibration monitoring and diagnostics system **115,** such as signal interfaces, signal transmitters, signal receivers, signal sampling circuitry, and threshold-based alarm detectors, can be implemented in hardware and such hardware can be coupled to the computer **700** accordingly. In this exemplary implementation, one or more processors, such as the processor **705,** can be configured to interact with a memory **730.** The processor **705** can be implemented and operated using appropriate hardware, software, firmware, or combinations thereof. Software or firmware implementations can include computer-executable or machine-executable instructions written in any suitable programming language to perform the various functions described. In one embodiment, instructions associated with a function block language can be stored in the memory **730** and executed by the processor **705.**

The memory **730,** which can be implemented wholly or in part in the form of the cloud storage **140** shown in FIG. 1, can be used to store program instructions that are loadable and executable by the processor **705,** as well as to store data for use during the execution of these programs. Such data can include data generated by the monitoring system **120,** such as data pertaining to the rotary velocity behavior of the moving component **105** and/or data indicating an oscillatory condition, a torsional vibration condition etc. in the moving component **105.** Depending on the configuration and type of the computer **700,** the memory **730** can be volatile (such as random access memory (RAM)) and/or non-volatile (such as read-only memory (ROM), flash memory, etc.). In some embodiments, the memory devices can also include additional removable storage **735** and/or non-removable storage **740** including, but not limited to, magnetic storage, optical disks, and/or tape storage. The disk drives and their associated computer-readable media can provide non-volatile storage of computer-readable instructions, data structures, program modules, and other data. In some implementations, the memory **730** can include multiple different types of memory, such as static random access memory (SRAM), dynamic random access memory (DRAM), or ROM.

The memory **730,** the removable storage, and the non-removable storage are all examples of non-transient computer-readable storage media. Such non-transient computer-readable storage media can be implemented in any method or technology for storage of information such as computer-readable instructions, data structures, program modules or other data. Additional types of non-transient computer storage media that can be present include, but are not limited to, programmable random access memory (PRAM), SRAM, DRAM, ROM, electrically erasable programmable read-only memory (EEPROM), compact disc read-only memory (CD-ROM), digital versatile discs (DVD) or other optical storage, magnetic cassettes, magnetic tapes, magnetic disk storage or other magnetic storage devices, or any other medium which can be used to store the desired information and which can be accessed by the processor **705.** Combinations of any of the above should also be included within the scope of non-transient computer-readable media.

Turning to the contents of the memory **730,** the memory **730** can include, but is not limited to, an operating system (OS) **731** and one or more application programs or services for implementing one or more computational components of the torsional vibration monitoring and diagnostics system **115** disclosed herein (indicated by a reference numeral **732).**

The computer **700** can include one or more communication connections **710** that allows for communication with various devices or equipment capable of communicating with the computer **700.** The connections can be established via various data communication channels or ports, such as USB or COM ports to receive connections for cables connecting the computer **700** to various other devices on a network. In one embodiment, the communication connections **710** may include Ethernet drivers that enable the computer **700** to communicate with other devices on the network. The computer **700** can also include a graphical user input/output interface **725** that allows the computer **700** to be coupled to a suitable display through which a human operator can interact with the computer **700.**

Many modifications and other embodiments of the example descriptions set forth herein to which these descriptions pertain will come to mind having the benefit of the teachings presented in the foregoing descriptions and the associated drawings. Thus, it will be appreciated the disclosure may be embodied in many forms. Therefore, it is to be understood that the disclosure is not to be limited to the specific embodiments. Although specific terms are employed herein, they are used in a generic and descriptive sense only. The scope of the present invention is defined in the appended claims.

## Claims

1. A method of using a torsional vibration monitoring and diagnostics system (115) coupled to a moving component (105), the method comprising:
receiving from one or more sensors (110, 145), a time-variant signal representing a motion characteristic of the moving component (105);
deriving from the time-variant signal, at various instants in time, a set of frequency-domain snapshots (220), each frequency-domain snapshot (221, 222, 223) of the set of frequency-domain snapshots (220) representing an instantaneous frequency domain snapshot indicative of a spectral characteristic of the time-variant signal at a corresponding instant in time;
processing the set of frequency-domain snapshots (220) to derive information indicative of a torsional vibration characteristic of the moving component (105);
providing a frequency-domain alarm threshold (405);
comparing in real-time, each of the set of frequency-domain snapshots (220) against the frequency-domain alarm threshold (405);
generating one of a warning signal or an alarm signal when at least a portion of at least one of the set of frequency-domain snapshots (220) exceeds the frequency-domain alarm threshold (405);
wherein the frequency-domain alarm threshold (405) is defined as a spectral envelope, **characterized in that** the frequency-domain alarm threshold (405) is defined as a spectral envelope by using one or more averaged frequency domain snapshots, wherein each averaged frequency domain snapshot (221) is an averaged version of multiple time-variant signal samples collected over a period of time; and **in that** the method further comprises:
providing a timer;
using the timer to determine a period of time during which at least a portion of the frequency-domain snapshots (221, 222, 223) in the set of frequency-domain snapshots (220) exceeds the spectral envelope and transmitting the one of the warning signal or the alarm signal when the period of time exceeds a threshold time period set in the timer.

2. The method of claim 1, wherein the time-variant signal is received in real-time in the torsional vibration monitoring and diagnostics system (115); wherein the various instants in time conform to a periodically repetitive pattern; and wherein the motion characteristic of the moving component (105) comprises a velocity behavior of the moving component (105).

3. The method of any preceding claim, further comprising:
periodically deriving the average frequency-domain snapshot by using a subset of the set of frequency-domain snapshots (221, 222, 223); and
archiving the average frequency-domain snapshot.

4. A non-transitory computer-readable storage medium comprising instructions which, when executed by at least one computer, cause the at least one computer to carry out the steps of the method of any of claims 1 to 3.

## Patentansprüche

1. Verfahren zum Verwenden eines Torsionsschwingungsüberwachungs- und -diagnosesystems (115), das mit einer beweglichen Komponente (105) gekoppelt ist, das Verfahren umfassend:
Empfangen, von einem oder mehreren Sensoren (110, 145), eines zeitvarianten Signals, das eine Bewegungseigenschaft der beweglichen Komponente (105) darstellt;
Ableiten, von dem zeitvarianten Signal zu verschiedenen Zeitpunkten, eines Satzes von Frequenzbereichsmomentaufnahmen (220), wobei jede Frequenzbereichsmomentaufnahme (221, 222, 223) des Satzes von Frequenzbereichsmomentaufnahmen (220) eine sofortige Frequenzbereichsmomentaufnahme darstellt, die eine Spektraleigenschaft des zeitvarianten Signals zu einem entsprechenden Zeitpunkt angibt;
Verarbeiten des Satzes von Frequenzbereichsmomentaufnahmen (220), um Informationen abzuleiten, die eine Torsionsschwingungseigenschaft der beweglichen Komponente (105) angeben;
Bereitstellen eines Frequenzbereichsalarmschwellenwerts (405);
Vergleichen in Echtzeit, jedes des Satzes von Frequenzbereichsmomentaufnahmen (220) mit dem Frequenzbereichsalarmschwellenwert (405);
Erzeugen eines von einem Warnsignal oder einem Alarmsignal, wenn mindestens ein Abschnitt von mindestens einem des Satzes von Frequenzbereichsmomentaufnahmen (220) den Frequenzbereichsalarmschwellenwert (405) überschreitet;
wobei der Frequenzbereichsalarmschwellenwert (405) als eine Spektralhülle definiert ist, **dadurch gekennzeichnet, dass** der Frequenzbereichsalarmschwellenwert (405) als eine Spektralhülle durch Verwendung einer oder mehrerer gemittelter Frequenzbereichsmomentaufnahmen definiert ist, wobei jede gemittelte Frequenzbereichsmomentaufnahme (221) eine gemittelte Version mehrerer zeitvarianter Signalabtastwerte ist, die über einen Zeitraum gesammelt werden; und **dadurch, dass** das Verfahren ferner umfasst:
Bereitstellen eines Zeitgebers;
Verwenden des Zeitgebers, um einen Zeitraum zu bestimmen, während dem mindestens ein Abschnitt der Frequenzbereichsmomentaufnahmen (221, 222, 223) in dem Satz von Frequenzbereichsmomentaufnahmen (220) die Spektralhülle überschreitet und Übertragen des einen des Warnsignals oder des Alarmsignals, wenn der Zeitraum einen Schwellenzeitraum überschreitet, der in dem Zeitgeber eingestellt ist.

2. Verfahren nach Anspruch 1, wobei das zeitvariante Signal in Echtzeit in dem Torsionsschwingungsüberwachungs- und diagnosesystem (115) empfangen wird; wobei die verschiedenen Zeitpunkte einem sich periodisch wiederholenden Muster entsprechen; und wobei die Bewegungseigenschaft der beweglichen Komponente (105) ein Geschwindigkeitsverhalten der beweglichen Komponente (105) umfasst.

3. Verfahren nach einem der vorstehenden Ansprüche, ferner umfassend:
periodisches Ableiten der durchschnittlichen Frequenzbereichsmomentaufnahme durch Verwenden einer Teilmenge des Satzes von Frequenzbereichsmomentaufnahmen (221, 222, 223); und
Archivieren der durchschnittlichen Frequenzbereichsmomentaufnahme.

4. Nichtflüchtiges computerlesbares Speichermedium, umfassend Anweisungen, die, wenn sie durch mindestens einen Computer ausgeführt werden, den mindestens einen Computer veranlassen, die Schritte des Verfahrens nach einem der Ansprüche 1 bis 3 durchzuführen.

## Revendications

1. Procédé d'utilisation d'un système de surveillance et de diagnostic de vibrations de torsion (115) accouplé à un composant mobile (105), le procédé comprenant :
la réception, depuis un ou plusieurs capteurs (110, 145), d'un signal variable dans le temps représentant une caractéristique de mouvement du composant mobile (105) ;
la dérivation depuis le signal variable dans le temps, à divers instants dans le temps, d'un ensemble d'instantanés de domaine de fréquence (220), chaque instantané de domaine de fréquence (221, 222, 223) de l'ensemble d'instantanés de domaine de fréquence (220) représentant un instantané instantané de domaine de fréquence indiquant une caractéristique spectrale du signal variable dans le temps à un instant correspondant dans le temps ;
le traitement de l'ensemble d'instantanés de domaine de fréquence (220) afin de dériver des informations indiquant une caractéristique de vibration de torsion du composant mobile (105) ;
la fourniture d'un seuil d'alarme de domaine de fréquence (405) ;
la comparaison en temps réel de chacun de l'ensemble d'instantanés de domaine de fréquence (220) avec le seuil d'alarme de domaine de fréquence (405) ;
la génération de l'un parmi un signal d'avertissement ou un signal d'alarme lorsqu'au moins une partie d'au moins l'un de l'ensemble d'instantanés de domaine de fréquence (220) dépasse le seuil d'alarme de domaine de fréquence (405) ;
dans lequel le seuil d'alarme de domaine de fréquence (405) est défini comme une enveloppe spectrale, **caractérisé en ce que** le seuil d'alarme de domaine de fréquence (405) est défini comme une enveloppe spectrale à l'aide d'un ou plusieurs instantanés moyennés de domaine de fréquence, dans lequel chaque instantané moyenné de domaine de fréquence (221) est une version moyennée de multiples échantillons de signaux variables dans le temps collectés sur une période ; et **en ce que** le procédé comprend en outre :
la fourniture d'un temporisateur ;
l'utilisation du temporisateur afin de déterminer une période pendant laquelle au moins une partie des instantanés de domaine de fréquence (221, 222, 223) de l'ensemble d'instantanés de domaine de fréquence (220) dépasse l'enveloppe spectrale et la transmission de l'un parmi le signal d'avertissement ou le signal d'alarme lorsque la période dépasse un seuil fixé dans le temporisateur.

2. Procédé selon la revendication 1, dans lequel le signal variable dans le temps est reçu en temps réel dans le système de surveillance et de diagnostic de vibrations de torsion (115) ; dans lequel les différents instants dans le temps se conforment à un modèle périodiquement répétitif ; et dans lequel la caractéristique de mouvement du composant mobile (105) comprend un comportement de vitesse du composant mobile (105).

3. Procédé selon l'une quelconque revendication précédente, comprenant en outre :
la dérivation périodique de l'instantané moyen de domaine de fréquence à l'aide d'un sous-ensemble de l'ensemble d'instantanés de domaine de fréquence (221, 222, 223) ; et
l'archivage de l'instantané moyen de domaine de fréquence.

4. Support de stockage non transitoire lisible par ordinateur comprenant des instructions qui, lorsqu'elles sont exécutées par au moins un ordinateur, amènent l'au moins un ordinateur à exécuter les étapes du procédé de l'une quelconque des revendications 1 à 3.
